Europäisches Patentamt

**European Patent Office**

**Office européen des brevets**

(19)

(11) Numéro de publication: **0 161 997**
A1

# (12) DEMANDE DE BREVET EUROPEEN

(21) Numéro de dépôt: **85430009.2**

(22) Date de dépôt: **29.03.85**

(51) Int. Cl.⁴: **H 04 M 11/00,** H 04 N 7/173

(30) Priorité: **05.04.84 FR 8405449**

(43) Date de publication de la demande: **21.11.85**
**Bulletin 85/47**

(84) Etats contractants désignés: **AT BE CH DE GB IT LI LU NL SE**

(71) Demandeur: **FEDERATION DE L'INSTITUT ARNAULT TZANCK, Avenue Pierre Ziller, F-06700 Saint Laurent du Var (FR)**

(72) Inventeur: **Malnati, Jean, 32 rue du Gendarme Desclair, F-06800 Cagnes Sur Mer (FR)**

(74) Mandataire: **Hautier, Jean-Louis, OFFICE MEDITERRANEEN DE BREVETS D'INVENTION 24 rue Masséna, F-06000 Nice (FR)**

(54) **Dispositif de commande d'au moins un appareil à partir d'au moins un téléphone relié à un autocommutateur.**

(57) Le dispositif selon l'invention est remarquable en ce qu'il comporte au moins un décodeur (5) branché en parallèle sur le téléphone (1) et qui est relié à l'appareil (6) à commander, et un codeur (3) branché en dérivation sur le commutateur (2) de manière telle qu'à partir d'un code téléphonique, l'autocommutateur (2) oriente la ligne vers le codeur (3) qui exécute une prise de ligne et génère un code de fréquences dans le registre audible vers le décodeur correspondant, tandis que le décodeur émet un signal de commande de l'appareil concerné dès qu'il a reconnu le signal provenant du codeur (3).

L'invention concerne un dispositif de commande d'un appareil à partir d'un téléphone relié à un autocommutateur. L'appareil selon l'invention permet en outre, de comptabiliser le temps de fonctionnement de l'appareil qu'il commande.

Il est connu de mettre en marche, pour une durée déterminée, par exemple un téléviseur, dans un hôtel ou un hôpital, au moyen de pièces de monnaie ou de jetons. Toutefois, ces systèmes ne sont pas souples puisqu'il faut nécessairement posséder les pièces ou jetons en quantité suffisante le moment voulu et parfois même perdre un crédit de temps d'utilisation lorsque l'appareil est arrêté au cours d'un cycle de fonctionnement.

C'est l'une des applications possibles de l'invention de mettre en marche un téléviseur, de gérer son temps d'utilisation et même de permettre une facturation directe à l'utilisateur lorsque le dispositif est combiné avec un ordinateur.

Le dispositif selon l'invention est remarquable en ce qu'il comporte au moins un décodeur branché en parallèle sur le téléphone et qui est relié à l'appareil à commander, et un codeur branché en dérivation sur le commutateur de manière telle qu'à partir d'un code téléphonique, l'autocommutateur oriente la ligne vers le codeur qui exécute une prise de ligne et génère un code de fréquences dans le registre audible vers le décodeur correspondant, tandis que ce dernier émet un signal de commande de l'appareil concerné dès qu'il a reconnu le signal provenant du codeur.

Avantageusement le codeur est tel qu'à chaque appel téléphonique qui oriente la ligne vers ledit codeur, celui-ci fait une inversion de polarité de sorte que l'autommutateur établit la transparence entre la ligne utilisateur et la ligne du codeur tandis que le décodeur qui reçoit le signal audible du codeur est muni de moyens pour générer et renvoyer un signal de fréquence déterminée qui est destiné après détection par le codeur a commander une logique de commutation qui établit de nouveau une inversion de polarité pour libérer la ligne du codeur et le prédisposer à un nouvel appel.

De préférence le codeur est en outre muni d'au moins un circuit de sécurité qui permet de libérer la ligne par inversion de polarité au bout d'un temps déterminé, si cette inversion n'a pas été déjà faite par le signal retour du décodeur.

Selon un mode de réalisation le codeur comprend un générateur de codage et un circuit prise de ligne et de départ des impulsions qui comporte un oscillateur convertisseur à double isolement galvanique qui alimente un circuit de détection de prise de ligne relié d'une part à un circuit d'inversion de polarité et à un circuit détecteur de tonalité lui-même branché sur une logique de libération de ligne commandé par une minuterie de limitation connectée au circuit d'inversion de polarité.

Le décodeur présente avantageusement un dispositif de comptage à mémoire destiné à prédéterminer une durée d'utilisation d'un cycle de fonctionnement et un dispositif d'arrêt de comptage agencé de manière telle que le temps ne soit décompté que durant le fonctionnement réel de l'appareil.

Le décodeur peut comporter aussi un dispositif d'alarme de fin de comptage destiné à prévenir de la fin ou de la fin proche de la durée du cycle de fonctionnement prédéterminé.

Dans le cas où le décodeur est muni d'un système de comptage le commutateur peut en outre être connecté à un ordinateur de manière à établir des facturations aux utilisateurs en fonction de la durée d'utilisation réelle de l'appareil.

L'invention sera mieux comprise et d'autres particularités apparaîtront à la lecture de la description qui va suivre et qui se réfère aux dessins annexés dans lesquels:

-la figure 1 montre schématiquement une vue d'ensemble d'un dispositif selon l'invention,

- la figure 2 montre un schéma simplifié du codeur selon l'invention et,

- la figure 3 montre un synoptique d'un décodeur selon l'invention.

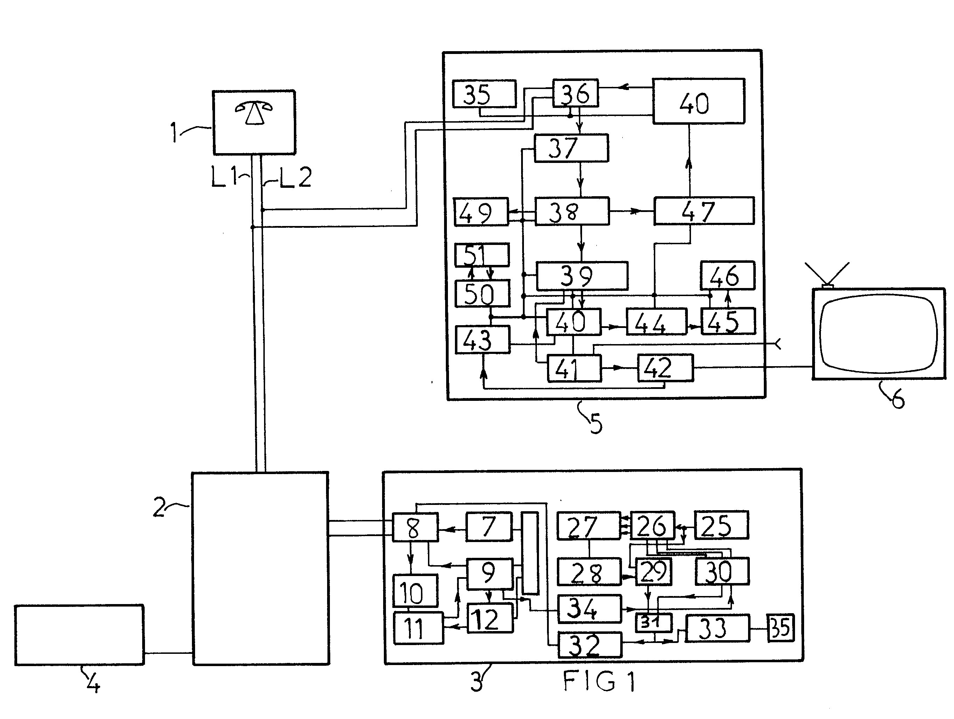

La figure 1 montre un téléphone 1, relié à un autocommutateur 2 par une ligne L1, L2.

L'autocommutateur 2 est connecté à un codeur 3 et un ordinateur 4 tandis qu'un décodeur 5, branché en parallèle sur la ligne L1, L2, du téléphone, est également relié à un téléviseur 6.

Le codeur se compose de deux parties, un circuit de prise de ligne et de départ des impulsions de codage et un générateur du codage avec possibilité d'audition permettant de suivre les séquences.

Le circuit de prise de ligne comporte un oscillateur convertisseur 7, (figure 1), qui permet par un double isolement galvanique, d'alimenter un circuit de détection de prise de ligne 8.

Le circuit de détection de prise de ligne est relié d'une part à un circuit d'inversion de polarité 9 et à un circuit détecteur de tonalité (PLL) 10 lui-même branché sur une logique de libération de ligne 11 commandée par une minuterie de limitation 12 qui est elle-même connectée au circuit d'inversion de polarité 9, tandis qu'une alimentation générale est prévue en 13.

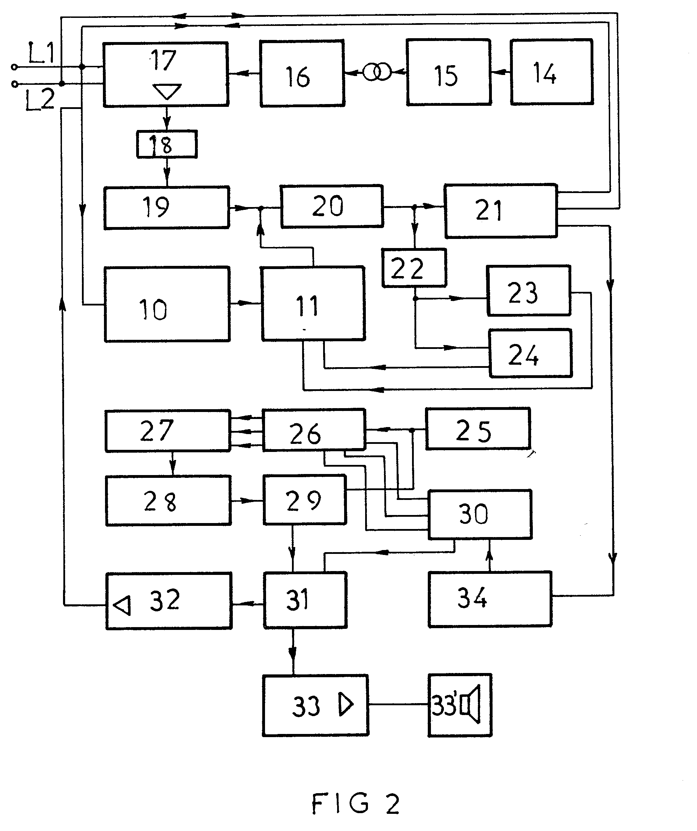

Comme le montre plus en détails la figure 2, l'oscillateur convertisseur 7 de la figure 1 comporte un oscillateur 14, un amplificateur 15 et le circuit de détection de prise de ligne 8 (figure 1) comporte une cellule de redressement filtrage, un régulateur de tension 16, un circuit d'entrée d'une impédance de 10 k$\Omega$ et un amplificateur 17 ayant pour charge un circuit opto-électronique 18.

Le circuit d'inversion de polarité 9 de la figure 1 comporte (figure 2) un compteur 19 relié à une mémoire 20, branché sur un inverseur de polarité 21 tandis que la sortie de la mémoire est connectée par l'intermédiaire d'un relais 22 à la minuterie de limitation qui comporte un double minuteur 23,24 également relié à la logique de libération de ligne 11.

L'inverseur 21 est relié aux lignes L1,L2 ainsi qu'à un système de départ séquence 34 dont il sera question ci-après.

Le circuit décrit ci-avant fonctionne de la manière suivante:

Du circuit opto-électronique un certain nombre d'impulsions est pris en considération (pour s'affranchir des parasites) par le compteur 19 qui prédispose la mémoire 20, celle-ci permettant par l'intermédiaire de l'inverseur 21 de présenter sur l'entrée l'inversion de polarité d'une intensité de 30 mA, cette · inversion de polarité détectée par l'autocommutateur permettant d'établir la transparence des lignes. L'inverseur 21 commande également le système de démarrage de la partie génératrice du codage (système de départ séquence 34).

Pour libérer la ligne, il suffit de refaire l'inversion de polarité c'est à dire de la remettre dans son état initial (l'autocommutateur libérant ainsi la ligne). Cette libération est obtenue au moyen du détecteur 10 et de la logique 11 qui va remettre la mémoire 20 en état d'attente de telle sorte que l'inverseur 21 sera rétabli à l'état de repos.

Le détecteur 10 reçoit une fréquence déterminée de fin de cycle provenant du décodeur.

Dans le cas où, pour une raison quelconque (panne, coupure de ligne etc), la transmission de fin de cycle n'est pas établie, les minuteurs 23 et 24 établissent la même séquence au bout d'une durée déterminée (par exemple 20 et 21 secondes) afin d'assurer une double sécurité de libération de ligne.

Le générateur de codage du codeur que l'on retrouve sur les figures 1 et 2 comporte un oscillateur 25 à deux portes "OU" qui fait office d'horloge.

Cet oscillateur fait tourner un compteur 26 qui contrôle un multiplexeur 27 à huit entrées, soit huit notes (ici la même séquence est répétée deux fois) dont la sortie est reliée à un programmateur de fréquence 28 (liaison d'un U.J.T. dont la fréquence variera en fonction de la position du multiplexeur grâce à son réseau R.).

Le programmateur 28 est suivi d'une porte "OU" 29 à deux entrées, l'une recevant la dent de scie de l'U.J.T. et l'autre étant commandée par le signal d'horloge (oscillateur 25) de manière à permettre d'obtenir en sortie les notes de chaque alternance négative de l'horloge (alternance note-silence).

Comme le compteur 26 tourne en permanence, on obtient des séquences codées indéfiniment. Une logique de décision 30 connectée d'une part à l'inverseur 21 par l'intermédiaire du système de départ séquence 34 (circuit anti-rebond) précité et d'autre part au compteur 26 et qui est ici composée de deux bascules J,K et 6 portes "NOR" va permettre d'envoyer sur une autre porte "NOR" 31 à deux entrées (l'autre entrée étant branchée à la sortie de la porte 29) un signal 0 pendant huit périodes d'horloge (la logique 30 étant prédisposée par la remise à zéro du système 34).

Les séquences transmises du compteur 26 à la logique de décision des huit périodes va permettre une transmission dans l'ordre de départ (les huit notes doivent en effet être ordonnées pour être transmises, car le décodeur ne peut les reconnaître que dans un ordre déterminé).

Enfin, un amplificateur adaptateur de ligne 32 en sortie est rélié à la ligne téléphonique tandis qu'un amplificateur auditif 33 et un haut-parleur 33' permettent de suivre les séquences.

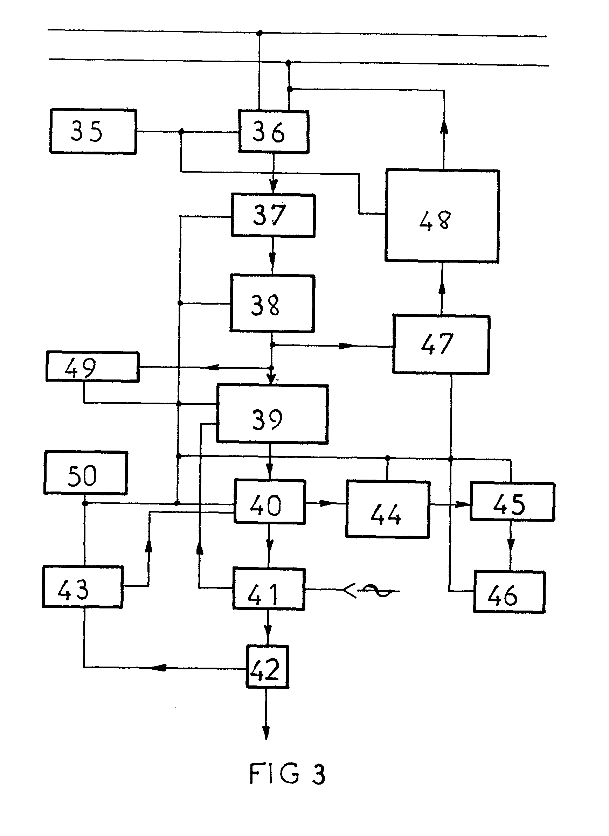

Les figures 1 et 3 montrent un synoptique du décodeur.

Le décodeur est destiné à mettre en marche le téléviseur 6, contrôler le temps de fonctionnement de l'appareil et libérer la ligne occupée par le codeur pour permettre un autre appel ainsi qu'émettre un signal de fin de séquence d'utilisation.

Le synoptique des figures 1 et 3 montre une alimentation 35 de ligne reliée à une prise de connection 36 de ligne branchée sur la ligne téléphonique et sur un récepteur de fréquence 37 suivi d'un dispositif de décodage et de commande 38, d'une mémoire de commande et de verrouillage 39, d'un dispositif de comptage horaire 40, d'un relais 41 et d'un transformateur d'intensité 42 relié au téléviseur et à une commande 43 d'arrêt de comptage branché sur le dispositif de comptage horaire 40. Ce dernier commande une alarme de fin de comptage 44, qui par l'intermédiaire d'un oscillateur 45 agit sur un amplificateur haut-parleur 46 tandis qu'un détecteur de fin de cycle de fréquences 47 branché sur le dispositif de décodage 38 agit sur un dispositif 48 relié au connecteur 36 et qui est destiné à annoncer la fin de réception (avec boucle de verrouillage).

Les figures montrent encore un dispositif de visualisation 49, une alimentation logique 50 et dans le cas de la figure 1, une alimentation secourue 51.

Le décodeur fonctionne de la manière suivante:

Les signaux reçus sur la ligne téléphonique (le décodeur étant branché en parallèle sur la ligne du téléphone considéré) sont amplifiés et transmis à un photocoupleur.

Ce système présente l'avantage de mettre tous les signaux au même niveau d'amplification, étant donné que ces signaux, les forts (composition du numéro) et les faibles sont amenés à saturation, derrière une série de 4 PLL branchés en parallèle, permettant ainsi le décodage des signaux. Chaque PLL est accordé sur la fréquence désirée, en l'occurence le 1er PLL doit être accordé sur la première fréquence d'émission, le 2ème sur la deuxième etc. et il est suivi d'un multiplexeur (à huit entrées) dont l'entrée 0 est activée, et qui, de par sa sortie, active un jeu de portes dont une est chargée de la remise à zéro du système si, celui-ci, est défaillant. Ces mêmes portes permettront de faire tourner un compteur qui fera avancer d'un pas le multiplexeur lequel, dès la deuxième fréquence fera avancer d'un pas le système et lorsque le compteur aura tourné huit fois il présentera un pulse, qui donnera l'ordre au relais d'alimentation du téléviseur. Si pour une raison l'un des PLL ne faisait pas sa détection dans l'odre déterminé, le multiplexeur, ne recevant pas de signal ferait une mise à zéro du système, d'où l'impossibilité de compter huit fois. Ce pulse est transmis dans deux directions: vers le relais de commande 41 et vers le circuit 47,48 qui libèrera la ligne téléphonique du codeur (permettant un nouvel appel sur celui-ci).

Vers le relais de commande ce niveau 1 (pulse) positionne la mémoire 39 à 1 et bloque, grâce à un monostable, cette mémoire (possibilité de parasites engendrés par le relais). Ce circuit, d'une part, va permettre la mise à zéro des compteurs qui déterminent la durée d'utilisation extérieure (le maintien du relais) et d'autre part le déblocage du dispositif de de comptage 40. Ce dernier comporte une horloge et des diviseurs qui vont déterminer le temps imparti à la marche du téléviseur soit 1/2 heure, 1 heure, 2 heures etc.

Le téléviseur peut être dans l'un des trois états suivants: à l'arrêt, en veille ou en fonction.

A l'arrêt du téléviseur, il ne doit pas y avoir de décompte horaire.

A l'état de veille, l'interrupteur du téléviseur est en position marche mais il n'y a pas d'image ni de son (appareil avec télécommande à diode infrarouge) et dans ce cas aussi il ne doit pas y avoir de décompte horaire.

Par contre, en fonction, et dans ce cas seulement, il doit y avoir décompte et pour atteindre ce but lorsque le relais de commande 41 est enclenché sur le circuit d'alimentation 220 V du secteur, sur le secondaire du transformateur d'intensité 42, un comparateur (dispositif d'arrêt de comptage 43 du schéma des figures 1 et 3) analyse les 3 situations: dans les deux premiers états il bloquera le comptage entre l'horloge et les diviseurs de telle sorte que le passage de l'état fonction à l'un des deux autres états bloquera les diviseurs tandis que dans l'état fonction le comparateur libèrera le comptage et ceci jusqu'à la fin de la durée impartie.

Peu de temps avant la fin du comptage il est nécessaire d'aviser l'utilisateur qu'il arrive à l'échéance de son crédit de temps pour éviter la coupure. Par exemple, 4 minutes avant la fin de la durée impartie, un "bip bip" audible ou visuel (au choix), sera émis, ce qui permettra à l'utilisateur de faire redémarrer une séquence de temps qui remettra les diviseurs à zéro, en initialisant éventuellement une nouvelle facturation.

L'émission du "bip" se fera avantageusement par tranche de 30 secondes soit 4x1s de "bip" et le reste de silence.

Comme déjà dit un pulse de commande provenant du compteur est envoyé vers le circuit de libération de la ligne codeur.

Ce pulse va libérer un oscillateur d'une fréquence comprise, par exemple, entre 300 Hz et 3 kHz, et dont la durée d'émission sera déterminée par les diviseurs qui remettront le circuit à zéro.

Ceci débloquera l'oscillateur qui ne redémarrera que lors d'un prochain pulse du compteur. Cette fréquence est émise sur la ligne téléphonique et, du fait de la transparence entre le décodeur et le codeur, permet la liaison codeur, qui, disposant du PLL 10 accordé sur cette fréquence fera une inversion de polarité, ce qui aura pour effet de libérer la ligne et de prédisposer le codeur à un autre appel vers n'importe quelle direction.

Le fonctionnement dans son ensemble du dispositif selon l'invention est simple:

On compose sur le téléphone 1 un numéro code qui permet de reconnaître l'utilisateur et d'orienter la ligne de l'autocommutateur 2 vers le codeur 3. Ce dernier exécute une prise de ligne et génére un signal codé (ici huit notes) dans le registre vocal, soit de 300 Hz à 3 kHz.

Le décodeur 5 branché en parallèle sur la ligne téléphonique du demandeur réceptionne ce signal de huit notes et si celles-ci sont exactement dans l'ordre et dans les fréquences établies commandera la mise en fonction de l'appareil 6 tout en déclenchant le minutage du temps et en avisant le codeur de la bonne réception du signal. Le temps imparti ne sera décompté, comme déjà dit, qu'au cours du fonctionnement de l'appareil tandis qu'un signal préviendra l'utilisateur de la fin d'un cycle de fonctionnement de telle sorte que l'utilisateur aura le choix entre laisser l'appareil s'arrêter ou bien recommencer un nouveau cycle.

A la réception d'une demande de liaison qui correspond à la sonnerie classique d'un téléhone, le codeur fait une inversion de polarité, ce qui correspond à un "décrocher" du téléphone. Ainsi l'autocommutateur établit la transparence entre la ligne utilisateur et la ligne codeur.

Le décodeur qui reçoit les huit notes ainsi émises par le codeur, retourne à ce dernier un signal de fréquence déterminée qu'il décode au moyen du circuit 10 accordé sur cette fréquence. Le pulse qui est alors envoyé à la logique de commutation 11 fait une inversion de polarité et l'autocommutateur libère la ligne en prédisposant le codeur pour un nouvel appel tandis que le circuit double de sécurité 23,24 libère la ligne au bout d'un temps déterminé (environ 20 secondes) qui est bien sûr supérieur au cycle

total normal (10 à 12 secondes) de telle sorte qu'il y aura dans cet exemple 8 à 10 secondes de plus dans le cas où le message n'aboutirait pas.

REVENDICATIONS

1. Dispositif de commande d'au moins un appareil électrique (6) à partir d'une installation existante comportant au moins un téléphone (1) et une ligne reliée à un auto-commutateur (2) caractérisé en ce qu'il comporte :

- un décodeur de signal (5) branché en parallèle sur le téléphone qui est relié directement à l'appareil (6) à commander

- un codeur (3) branché en dérivation sur l'auto-commutateur (2) de manière telle qu'à partir d'un code téléphonique, l'auto-commutateur (2) oriente la ligne vers le codeur (3) qui exécute une prise de ligne et génère un code de fréquences dans le registre audible vers le décodeur (5) correspondant à l'appareil (6), tandis que ledit décodeur (5) autorise l'alimentation électrique secteur de l'appareil (6), permettant la mise en fonction de l'appareil (6), contrôle le temps de fonctionnement dudit appareil et libère la ligne et le codeur pour permettre un autre appel ainsi qu'émettre un signal de fin de séquence d'utilisation et de facturation pour la gestion.

2. Dispositif selon la revendication 1 caractérisé en ce que le codeur (3) est tel qu'à chaque appel téléphonique qui oriente la ligne vers ledit codeur, celui-ci fait une inversion de polarité de sorte que l'auto-commutateur (2) établit la transparence entre la ligne utilisateur et la ligne du codeur, tandis que le décodeur (5), qui reçoit le signal audible du codeur, est muni de moyens pour générer et renvoyer un signal de fréquence déterminée qui est destiné après détection (10) par le codeur à commander une logique de commutation (11), qui établit de nouveau une inversion de polarité pour libérer la ligne du codeur et la prédisposer à un nouvel appel.

3. Dispositif selon la revendication 2, caractérisé en ce que le codeur (3) est en outre muni d'au moins un circuit de sécurité (22 à 24) qui permet de libérer la ligne par inversion de polarité au bout d'un temps déterminé, si cette inversion n'a pas été déjà faite par le signal retour du décodeur (5).

4. Dispositif selon l'une des revendications 1 à 3, caractérisé en ce que le codeur (3) comprend un générateur de codage et un circuit prise de ligne et de départ des impulsions qui comporte un oscillateur convertisseur (7) à double isolement galvanique, qui alimente un circuit de détection de prise de ligne (8) relié d'une part à un circuit d'inversion de polarité (9) et d'autre part à un circuit détecteur de tonalité (10), lui-même branché sur une logique de libération de ligne (11) commandée par une minuterie de limitation connectée au circuit d'inversion de polarité (9).

5. Dispositif selon la revendication 4, caractérisé en ce que le circuit d'inversion de polarité (9) comporte un compteur (19) relié à une mémoire (20) branchée sur un inverseur de polarité (21), branché sur la ligne du téléphone et sur un système de départ (34) de générateur de codage, tandis que la sortie de la mémoire (20) est connectée par l'intermédiaire d'un relais (22) à la minuterie de limitation qui comporte un double minuteur (23, 24), également relié à la logique de libération de ligne (11).

6. Dispositif selon l'une des revendications 4 et 5 caractérisé en ce que le générateur de codage du codeur comporte un oscillateur (25) faisant office d'horloge et qui est destiné à faire touner un compteur (26) qui contrôle un multiplexeur (27), dont la sortie est reliée à un programmateur de fréquence (28), suivi d'une porte (29) à deux entrées dont l'autre entrée est commandée par le signal d'horloge de l'oscillateur (25), tandis qu'une logique de décision (30) est connectée d'une part à l'inverseur (21), par l'intermédiaire du système de départ séquence (34), et d'autre part au compteur (26) de manière à créer et envoyer sur une autre porte à deux entrées (31) un signal correspondant aux périodes de l'horloge, l'autre entrée de ladite porte (31) étant reliée à la sortie de la porte (29), un amplificateur adaptateur de ligne (32) reliée à la ligne téléphonique et un amplificateur auditif (33) étant en outre prévus en sortie.

7. Dispositif selon l'une des revendications 1 à 6, caractérisé en ce que le décodeur présente un dispositif de comptage (40) à mémoire destiné à prédéterminer une durée d'utilisation d'un cycle de fonctionnement et un et un dispositif d'arrêt de comptage (43) agencé de manière telle que le temps ne soit décompté que durant le fonctionnement réel de l'appareil.

8. Dispositif selon la revendication 7, caractérisé en ce que le dispositif de comptage (40) comporte une horloge et des diviseurs qui déterminent la durée impartie pour chaque cycle de fonctionnement et que le dispositif d'arrêt de comptage (43) est un comparateur qui est branché sur le secondaire d'un transformateur d'intensité (42) relié en outre, d'une part au moyen d'un relais (41) au dispositif de comptage (40) et d'autre part à l'appareil (6) de manière à analyser l'état dans lequel se trouve ledit appareil (marche, arrêt, veille) et à commander, en conséquence, le dispositif de comptage (40).

9. Dispositif selon l'une quelconque des revendications 7 et 8, caractérisé en ce que le décodeur comporte un dispositif d'alarme de fin de comptage (44 à 46) destiné à prévenir de la fin ou de la fin proche de

12          0161997

la durée du cycle de fonctionnement prédéterminé.

10. Dispositif selon l'une quelconque des revendications 1 à 8, dont le décodeur est muni d'un système de comptage du temps de fonctionnement de l'appareil (6), caractérisé en ce que le commutateur (2) est, en outre, connecté à un ordinateur (4) de manière à établir des facturations aux utilisateurs en fonction de la durée d'utilisation réelle de l'appareil.

FIG 1

FIG 2

FIG 3

Office européen
des brevets

**RAPPORT DE RECHERCHE EUROPEENNE**

0161997

Numéro de la demande

EP  85 43 0009

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-4 008 369  (D.L. THEURER et al.)<br>* Colonne 2, ligne 3 - colonne 4, ligne 6; colonne 9, lignes 32-58; colonne 15, ligne 43 - colonne 16, ligne 9; abrégé; figure 1 * | 1 | H 04 M  11/00<br>H 04 N   7/173 |
| A |  | 2-4,10 | |
| Y | WO-A-8 304 362  (HASHIMOTO)<br>*  Abrégé  * & GB - A - 2 130 052 (Cat. P) | 1 | |
| A |  | 7 | |
| A | WO-A-8 000 209  (TELEASE INC.)<br><br>* Page 3, ligne 26 - page 4, ligne 28; page 12, ligne 26 - page 16, ligne 29, abrégé; figures 1,5 * | 1,2,4, 7-10 | |
| A | NEC RESEARCH & DEVELOPMENT, no. 65, avril 1982, pages 82-92, Tokyo, JP; K. SHIRAI et al.: "Remote automatic meter reading and telecontrol system using telephone lines"<br>* Page 83, tableau 1 * | 1,2 | |

DOMAINES TECHNIQUES RECHERCHES (Int. Cl.4)

H 04 M
H 04 N

Le présent rapport de recherche a été établi pour toutes les revendications

| Lieu de la recherche | Date d'achèvement de la recherche | Examinateur |
|---|---|---|
| LA HAYE | 15-07-1985 | MIKKELSEN C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03 82